# EUROPEAN PATENT APPLICATION

(11) **EP 4 567 078 A1**
(43) Date of publication of application: **11.06.2025**
(21) Application number: 23849825.7
(22) Date of filing: 06.07.2023
(51) Int. Cl.: C09D 9/00, C08K 5/01, C08L 83/06

(54) **SILICONE RESIN DISSOLVING AGENT AND METHOD FOR SEPARATING SILICONE COATING AND BASE MATERIAL**

(30) Priority: 03.08.2022 JP 2022124346
(71) Applicant: SHIN-ETSU CHEMICAL CO., LTD., Tokyo 1000005 (JP)
(72) Inventor: ASHIDA, Ryo, Annaka-shi, Gunma 379-0224 (JP); UBUKATA, Shigeru, Annaka-shi, Gunma 379-0224 (JP); HIRABAYASHI, Satao, Annaka-shi, Gunma 379-0224 (JP)
(74) Representative: Sonnenhauser, Thomas Martin
(86) International application number: PCT/JP2023/025117
(87) International publication number: WO 2024/029266

(57) **Abstract**

The present invention is a silicone resin-dissolving agent including a siliconate compound (A) represented by the formula (1) and/or the formula (2) and an aprotic organic solvent (B) having a relative permittivity of 10.0 or less. In the formulae, R independently represents a group selected from an alkyl group having 1 to 10 carbon atoms and an aryl group having 6 to 10 carbon atoms, which may be substituted with a halogen atom; M represents a cationic species selected from an alkali metal ion, a tetraalkylammonium ion, a benzyltrialkylammonium ion, and a tetraalkylphosphonium ion; and "n" represents an integer of 0 to 200. By the present invention, it is possible to provide a silicone resin-dissolving agent for recovering a base material from an integrated molded product of a silicone resin such as a silicone rubber and a resin base material or a metal base material by dissolving the silicone resin.

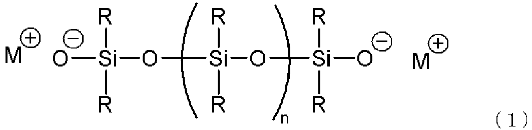

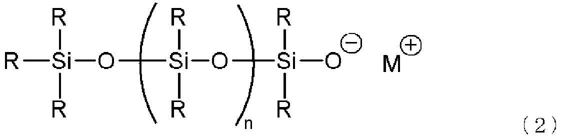

## Description

### TECHNICAL FIELD

The present invention relates to a silicone resin-dissolving agent and a method for separating a silicone coating from a base fabric.

### BACKGROUND ART

Silicone rubber is excellent in heat resistance, cold resistance, safety, electrical insulation, and weather resistance, etc., and therefore, is used in wide range of fields such as automobile parts including connector seals and spark plug boots, electrical and electronic parts including copy machine rolls and microwave oven packing, construction materials including sealants, and others including feeding bottle nipples and diving equipment. Among these various uses, there are many cases in which the rubber is used as a part in combination with resin base material, metal base material, etc.

Conventionally, many methods have been proposed for obtaining a molded product in which a cured product of an addition-curable silicone rubber composition and resin base material or a metal base material are integrated. For example, there is a method in which a primer is applied to a surface of a base material, and an uncured silicone rubber composition is applied thereon and cured to achieve adhesion. There is also a method of applying an adhesive to an interface of a base material to integrate them. Furthermore, there is a method in which a self-adhesive silicone rubber material prepared by blending silicone rubber with an internal addition-type adhesive is cured on the base material. In these examples, the silicone rubber and the base material are often firmly adhered to each other.

In addition, silicone-coated base fabric, in which the surface of PET (polyethylene terephthalate) base fabric or PA66 (Nylon 66) base fabric has been coated with curable silicone rubber, is excellent in flame retardant properties, airtightness, etc. Therefore, it is suitable for applications such as a base fabric for automobile airbags and coating for tent curtains. These applications require strong adhesion between the silicone rubber coating material and the base fabric. Examples of such means include applying a primer to the base fabric and adding an internal addition-type adhesive to the silicone rubber.

On the other hand, in recent years, there has been an active movement to recycle plastics and metals in order to reduce CO₂ emissions and reduce waste. However, in the above molded products integrated with the silicone rubber, the silicone rubber and the base material are firmly adhered to each other, making it difficult to separate those two and difficult to recycle the base material. For this, a method of dissolving the silicone rubber is considered as a method of separating the silicone rubber from the base material.

As a method for dissolving the silicone rubber, a silicone-dissolving liquid containing phosphonitrile chloride and a linear polysiloxane having a degree of polymerization of 10 to 50 is disclosed (Patent Document 1). With this method, it is possible to dissolve the silicone rubber selectively without causing swelling of other plastic members. However, it is necessary to use phosphonitrile chloride having extreme toxicity, and thus there are concerns about causing health damage and environmental burden to the surrounding.

As another method for dissolving the silicone rubber, a resin-dissolving liquid containing an alkylbenzenesulfonic acid and a hydrochlorofluoroolefin is disclosed (Patent Document 2). In this method, a hydrochlorofluoroolefin having a small environmental burden is used as a solvent, and it is possible to dissolve silicone resin, urethane resin, polyamide resin, etc. However, because it uses an alkylbenzenesulfonic acid having a strong acidity, it cannot be used to dissolve and separate silicone rubber from metal base material or resin base material that is weak against acidity.

In addition, as a method for separating the silicone rubber from the resin base fabric, a method in which a silicone-coated base fabric for an airbag, in which PA66 base fabric is coated with silicone, is mixed in strong-alkaline solution containing a tertiary amine, an anionic surfactant, and sodium hydroxide to separate the silicone rubber is disclosed (patent Document 3). However, this method requires long-term treatment with a strong-alkaline aqueous solution having a pH of 13 or more, and there is concern about damage to dissolution equipment. Furthermore, this method cannot be used for resin base material that cannot withstand strong alkalinity.

Further, as another method, a method in which silicone-coated base fabric for an airbag having a PA66 base fabric coated with silicone is mixed in a solution containing alkylbenzene sulfonic acid and a saturated hydrocarbon having a flash point of 70°C or higher to separate the silicone rubber, is disclosed (Patent Document 4). However, this method requires handling of a strong-acidic solution, and there are concerns about corrosion of equipment, health damage of workers, etc. Furthermore, this method cannot be used for resin base material that cannot withstand strong acidity.

### CITATION LIST

### PATENT LITERATURE

Patent Document 1: JP2014-524941A
Patent Document **2:** JP2021-165382A
Patent Document 3: JP2017-124553A
Patent Document 4: JP2022-073181A

### SUMMARY OF INVENTION

### TECHNICAL PROBLEM

The present invention was made in view of the above circumstances, and has for its object to provide a silicone resin-dissolving agent for recovering a base material from an integrated molded product of a silicone resin such as a silicone rubber and a resin base material or a metal base material by dissolving the silicone resin.

### SOLUTION TO PROBLEM

To solve the above problem, the present invention provides a silicone resin-dissolving agent comprising:
(A) 1 to 90 mass% of a siliconate compound represented by the following general formula (1) and/or the following general formula (2), 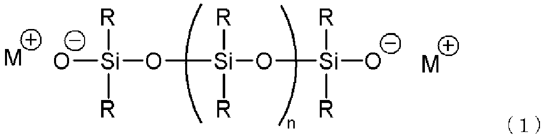 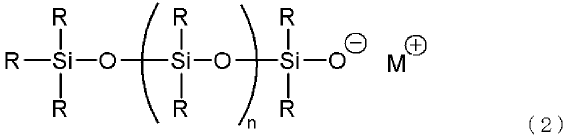 wherein R independently represents a group selected from an alkyl group having 1 to 10 carbon atoms and an aryl group having 6 to 10 carbon atoms, which may be substituted with a halogen atom; M represents a cationic species selected from an alkali metal ion, a tetraalkylammonium ion, a benzyltrialkylammonium ion, and a tetraalkylphosphonium ion; and "n" represents an integer of 0 to 200; and
(B) 99 to 10 mass% of an aprotic organic solvent having a relative permittivity of 10.0 or less.

Such a silicone resin-dissolving agent can dissolve a silicone resin in an integrated molded product of a resin base material or a metal base material and the silicone resin so as to recover the base material.

In this event, M preferably represents a cationic species selected from a sodium ion, a potassium ion, a tetramethylammonium ion, a tetrabutylammonium ion, and a tetrabutylphosphonium ion.

Such a silicone resin-dissolving agent functions as a more suitable silicone resin-dissolving agent.

Every R preferably represents a methyl group.

Such a silicone resin-dissolving agent functions as a further more suitable silicone resin-dissolving agent.

A method for separating a silicone coating from a base fabric that includes immersing a silicone-coated base fabric in the silicone resin-dissolving agent described above.

According to the inventive method for separating a silicone coating from a base fabric, the silicone coating can be removed from the base fabric easily and suitably.

### ADVANTAGEOUS EFFECTS OF INVENTION

According to the present invention, it is possible to dissolve a silicone resin by immersing an integrated molded product of the silicone resin (e.g., silicone rubber) and a base material of a resin or of a metal in the silicone resin-dissolving agent containing the siliconate compound and the aprotic organic solvent having a relative permittivity of 10.0 or less so as to recover the base material.

### DESCRIPTION OF EMBODIMENTS

As a result of their diligent study to achieve the above objects, the inventors found that it is possible to dissolve a silicone resin by immersing an integrated molded product of the silicone resin and a base material of resin or of metal in a solution containing a siliconate compound and an aprotic organic solvent having a relative permittivity of 10.0 or less so as to recover the base material, and have completed the present invention.

That is, the present invention is a silicone resin-dissolving agent comprising:
(A) 1 to 90 mass% of a siliconate compound represented by the following general formula (1) and/or the following general formula (2), 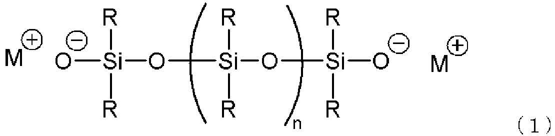 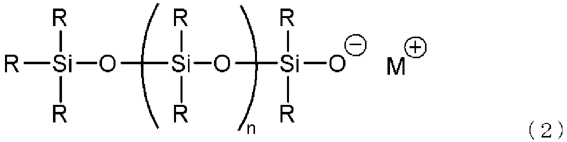 wherein R independently represents a group selected from an alkyl group having 1 to 10 carbon atoms and an aryl group having 6 to 10 carbon atoms, which may be substituted with a halogen atom; M represents a cationic species selected from an alkali metal ion, a tetraalkylammonium ion, a benzyltrialkylammonium ion, and a tetraalkylphosphonium ion; and "n" represents an integer of 0 to 200; and
(B) 99 to 10 mass% of an aprotic organic solvent having a relative permittivity of 10.0 or less.

### <Silicone Resin-Dissolving Agent>

The inventive silicone resin-dissolving agent includes a siliconate compound (A) represented by the above general formula (1) and/or the above general formula (2) and an aprotic organic solvent (B) having a relative permittivity of 10.0 or less.

Hereinafter, each component of the inventive silicone resin-dissolving agent will be described in detail.

### [Component A]

The component (A) is a siliconate compound represented by the following general formula (1) and/or the following general formula (2) and functions as a catalyst for dissolving (depolymerization) a siloxane bond (-O-Si-O-).

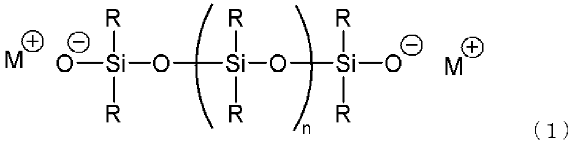

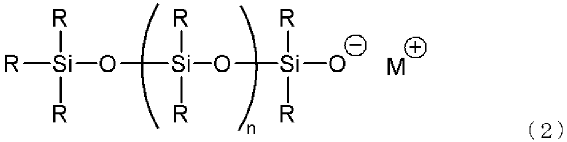

In the formulae, R independently represents a group selected from an alkyl group having 1 to 10 carbon atoms and an aryl group having 6 to 10 carbon atoms, which may be substituted with a halogen atom; M represents a cationic species selected from an alkali metal ion, a tetraalkylammonium ion, a benzyltrialkylammonium ion, and a tetraalkylphosphonium ion; and "n" represents an integer of 0 to 200.

R in the above formula (1) or (2) independently represents a group selected from an alkyl group having 1 to 10 carbon atoms and an aryl group having 6 to 10 carbon atoms. Specific examples include alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; halogen-substituted alkyl groups such as a chloromethyl group, a 3-chloropropyl group, and a 3,3,3-trifluoropropyl group. Particularly, R is preferably a methyl group, and more preferably every R is a methyl group.

M in the above formula (1) or (2) represents a cationic species selected from an alkali metal ion, a tetraalkylammonium ion, and a tetraalkylphosphonium ion. Specific examples include alkali metal ions such as a lithium ion, a sodium ion, a potassium ion, and a cesium ion; ions of quaternary ammonium such as tetramethylammonium, tetraethylammonium, tetrapropylammonium, tetraisopropylammonium, tetrabutylammonium, tetrahexylammonium, benzyltrimethylammonium, benzyltriethylammonium, and hexadecyltrimethylammonium; ions of quaternary phosphonium such as tetramethylphosphonium, tetraethylphosphonium, tetrapropylphosphonium, tetraisopropylphosphonium, tetrabutylphosphonium, and tetrahexylphosphonium. It is particularly preferable that M is a sodium ion, a potassium ion, a tetramethylammonium ion, a tetrabutylammonium ion, or a tetrabutylphosphonium ion.

"n" in the above formula (1) or (2) represents an integer of 0 to 200, preferably 2 to 150, more preferably 3 to 100, and further preferably 5 to 50. When the number-average degree of polymerization "n" is more than 200, the dissolving liquid to be obtained has high viscosity, which deteriorates workability in dissolving operation and makes a subsequent cleaning process complicated in some cases.

The content of the component (A) siliconate compound is 1 to 90 mass%, preferably 2 to 85 mass%, more preferably 5 to 80 mass% relative to the sum of the content of the component (A) and that of an aprotic organic solvent (B) described later. When the content is less than 1 mass%, the silicone rubber is not dissolved sufficiently in some cases. When the content is more than 90 mass%, the dissolving liquid has high viscosity, which deteriorates workability in some cases.

### <Preparation of Siliconate>

The various siliconates as the component (A) can be prepared by mixing the corresponding catalyst with a dialkyl cyclic polysiloxane such as octamethylcyclotetrasiloxane (D4), decamethylcyclopentasiloxane (D5), and dodecamethylcyclohexasiloxane (D6); a dialkyl polysiloxane with both ends blocked with dimethylsilanol groups; or a dialkyl polysiloxane with both ends blocked with trimethylsiloxy groups under appropriate reaction conditions, optionally together with a part or all of the component (B) as necessary. For example, when M in formula (1) or (2) is alkali metal, the catalyst is a corresponding alkali metal hydroxide; when M is tetraalkylammonium, the catalyst is a tetraalkylammonium hydroxide; and when M is tetraalkylphosphonium, the catalyst is a tetraalkylphosphonium hydroxide. There are cases where the above catalysts may be commercially available in a dissolving liquid thereof in water, alcohol, tetrahydrofuran, or the like. In such cases, the siliconate may be prepared also by mixing the catalyst-dissolved liquid with siloxane and then discharging the solution outside the system by heating or reducing pressure treatment. The reaction conditions vary depending on the catalyst. For example, when the catalyst is a potassium hydroxide, heating at 145°C under normal pressure for about 2 hours is required; when the catalyst is tetraalkylammonium, heating at 45°C under reduced pressure for about 12 hours is required; and when the catalyst is tetraalkylphosphonium, heating at 45°C under reduced pressure for about 6 hours is required.

Further, another method for preparing the component (A) is to react an organic alkali metal species with a cyclic compound such as hexamethylcyclotrisiloxane (D3). Specifically, it can be prepared by adding methyllithium or butyllithium dropwise to a tetrahydrofuran solution of D3 at low temperature. In addition, there is another method in which a compound containing a silanol group is reacted with a simple substance of alkali metal or an organic alkali metal to carry out a condensation reaction so as to prepare the siliconate. Specifically, trimethylsilanol or polydimethylsiloxane with both ends blocked with dimethylsilanol is reacted with metallic lithium, or an organic alkali metal such as methyllithium and butyllithium at low temperature, and then D3 is added thereto to be able to adjust the degree of polymerization.

### <Method for Measuring Number-Average Degree of Polymerization of Siliconate Compound>

The number-average degree of polymerization of the component (A) can be measured by GPC. However, because the component (A) is alkaline, measuring it as it is may damage the GPC equipment. Therefore, it is preferable to neutralize it with dilute hydrochloric acid or the like before the GPC measurement. Specifically, the component (A) is neutralized with a small excess amount of dilute hydrochloric acid, the aqueous layer is separated, and then excess hydrochloric acid is adsorbed and neutralized using KYOWAAD 500 (manufactured by Kyowa Chemical Industry Co., Ltd.). After filtration using a membrane filter, a sample for GPC measurement is prepared. GPC analysis is then performed under the following conditions, using toluene as a developing solvent for example, and the number-average degree of polymerization can be found in terms of polystyrene.

### [Measurement Conditions]

Developing solvent: toluene
Flow rate: 0.35 mL/min
Detector: differential refractive index detector (RI)
Column: TSK Guardcolumn Super H-L
TSKgel Super H4000 (6.0 mm I.D. × 15 cm × 1)
TSKgel Super H3000 (6.0 mm I.D. × 15 cm × 1)
TSKgel Super H2000 (6.0 mm I.D. × 15 cm × 2)
(All columns are made by Tosoh Corporation)
Column temperature: 40°C
Sample injection amount: 10 µL (a toluene solution having a concentration of 0.5 mass%)

One kind of the component (A) may be used, or two or more kinds thereof may be used in combination. When two or more kinds of siliconate compounds are used in combination, the siliconate compounds represented by formula (1) or the siliconate compounds represented by formula (2) may be used separately or the siliconate compound(s) represented by formula (1) and the siliconate compound(s) represented by formula (2) may be used in combination.

The structure of the prepared siliconate compound can be confirmed by ²⁹Si-NMR. The component (A) is alkaline, and it may damage an NMR test tube when it is measured as it is. Therefore, it is preferable to perform NMR measurement after neutralizing it with dilute hydrochloric acid or the like. Specifically, after neutralizing the component (A) with a small excess amount of dilute hydrochloric acid, an aqueous layer is separated, and then the excess hydrochloric acid is adsorbed and neutralized using KYOWAAD 500 (manufactured by Kyowa Chemical Industry Co., Ltd.). After filtration with a membrane filter, the mixture is heated under reduced pressure by using a rotary evaporator or the like to distill off the solvent. Then, a sample for NMR measurement is prepared. For example, measurement can be performed under the following conditions using deuterated chloroform as a solvent.

### [Measurement Conditions]

Measuring solvent: deuterochloroform
Sample Concentration: 30 wt%
Measurement Equipment: JNM-ECX-400 (manufactured by JEOL Ltd.)
Number of times of scan: 2,000 times

### [Component B]

The component (B) is an aprotic organic solvent having a relative permittivity of 10.0 or less, and functions as a swelling agent for silicone rubber and as a solvent for the component (A).

It is essential that the relative permittivity of the aprotic organic solvent as the component (B) is 10.0 or less. When the relative permittivity exceeds 10.0, the compatibility with the component (A) decreases, and thus the components (A) and (B) may separate from each other or the solubility of the silicone rubber may deteriorate. The lower limit of the relative permittivity of the aprotic organic solvent as the component (B) is not particularly limited, but can be 1.0 or greater for example.

Examples of the component (B) aprotic organic solvent include: linear or branched saturated aliphatic hydrocarbons such as hexane, heptane, octane, nonane, decane, undecane, dodecane, tridecane, tetradecane, pentadecane, hexadecane, heptadecane, octadecane, nonadecane, icosane, normal paraffin, and isoparaffin; aromatic hydrocarbons such as benzene, toluene, dimethylbenzene, trimethylbenzene, ethylbenzene, diethylbenzene, triethylbenzene, propylbenzene, dipropylbenzene, tripropylbenzene, isopropylbenzene, diisopropylbenzene, and triisobutylbenzene; Ester compounds such as methyl acetate, ethyl acetate, butyl acetate, isobutyl acetate, propyl acetate, isopropyl acetate, butyl acetate, methyl propionate, ethyl propionate, propyl propionate, butyl propionate, methyl butyrate, ethyl butyrate, propyl butyrate, and butyl butyrate; dialkyl ether compounds such as diethyl ether, dipropyl ether, diisopropyl ether, dibutyl ether, dipentyl ether, dihexyl ether, and dioctyl ether; glycol ether compounds such as diethylene glycol dimethyl ether, diethylene glycol diethyl ether, polyethylene glycol dimethyl ether, and diethylene glycol diethyl ether; and alicyclic ether compounds such as tetrahydrofuran, tetrahydropyran, and 1,4-dioxane. Saturated aliphatic hydrocarbons and aromatic hydrocarbons are particularly preferable. Specific examples of preferable organic solvents include decane, dodecane, normal paraffin, isoparaffin, toluene, and xylene.

For the organic solvent as the component (B), it is possible to use any organic solvent selected from the above group. However, the solvent preferably has a boiling point of 50°C to 300°C, more preferably 65°C to 250°C, and further preferably 80°C to 200°C. When the boiling point is 50°C or higher, the volatility of the organic solvent is low, environmental burden is not increased, and working environment is not deteriorated. When the boiling point is 300°C or lower, the solvent can be recovered and recycled by distillation or the like from the dissolving liquid after the completion of the dissolving.

The content of the aprotic organic solvent having a relative permittivity of 10.0 or less as the component (B) is 10 to 99 mass% relative to the sum of the content of the component (B) and the component of the siliconate compound (A) represented by the following general formula (1) and/or (2).

One kind of the component (B) may be used, or two or more kinds thereof may be used in combination.

### <Conditions for Dissolving Silicone Resin>

It is preferable to cut an integrated molded product of a silicone resin and a base material to a size that is easy to immerse and then immerse the cuts in a prepared silicone resin-dissolving agent. However, it may be immersed as it is without cutting. There are no particular restrictions on the molded product's size, thickness, condition, etc., but it is suitable to cut the product so that the size of one side is within 1 mm to 500 mm, preferably 2 mm to 300 mm, and more preferably 5 mm to 100 mm, because the cuts having such a size are easier to stir with a stirring blade, etc.

At this time, an integrated molded product of silicone resin and base material can be sufficiently dissolved only by immersing it in the silicone resin-dissolving agent, but stirring with the stirring blades of a dynamic mixer or the like, stirring with a stirrer such as a magnetic stirrer, shaking treatment with a shaker, ultrasonic treatment, and the like are effective in improving the dissolution rate, and stirring with a dynamic mixer or magnetic stirrer is particularly preferable.

There are no particular limitations on the weight ratio of the silicone resin-dissolving agent to the integrated molded product of silicone resin and base material, but it is preferable to use an amount of the dissolving liquid that allows the molded product to be completely immersed.

The dissolution temperature is not particularly limited as long as it is equal to or lower than the boiling point of the organic solvent used, but is 10°C to 200°C, preferably 15°C to 180°C, and more preferably 20°C to 150°C. When the temperature is lower than 10°C, the dissolution rate of the silicone rubber may become extremely slow, and when it exceeds 200°C, damage to the base material may become significant.

The dissolution time varies depending on the weight ratio of the silicone-coated base fabric to the dissolving solution, the stirring conditions, and the temperature conditions, and it is preferable to select an appropriate time. It is usually 0.2 to 120 minutes, preferably 0.5 to 90 minutes, and more preferably 1 to 60 minutes.

### <Silicone Resin>

The silicone resin that can be dissolved by the silicone resin-dissolving agent according to the present invention is not particularly limited, but a preferable example is silicone rubber. Specific examples of the silicone rubber include addition-curable silicone rubber, radical-curable silicone rubber, condensation-curable silicone rubber, and ultraviolet-curable silicone rubber. The agent can be applied to all silicone rubbers that have a siloxane bond. Furthermore, it is possible to apply even to the composition that may contain hydrophobic silica, hydrophilic silica, iron oxide, ultramarine, silicone resin, carbon black, glass beads, resin balloons, diatomaceous earth, metal oxide powder, metal powder, and metal hydroxide powder as filler. Additionally, it is also possible to apply to the composition that may contain a reaction regulator, an antioxidant, an adhesion aid, an adhesion promoter, a plasticizer, a flame retardant, or the like, as additives.

### <Base Material>

Examples of the base material to be molded integrally with the silicone resin include a metal base material and a resin base material. Examples of the metal base material include aluminum, iron, stainless steel (SUS), copper, magnesium, lead, nickel, titanium, zinc, molybdenum, oxides thereof, alloys thereof, and plating thereof. Examples of the resin base material include acrylonitrile-butadiene-styrene (ABS) resin, polycarbonate (PC) resin, polyurethane (PU) resin, polystyrene (PS) resin, acrylic resin, polyethylene terephthalate (PET) resin, polybutylene terephthalate (PBT) resin, polyphenylene oxide (PPO) resin, polyphenylene sulfide (PPS) resin, polysulfone (PSU) resin, nylon 6 (PA6) resin, nylon 66 (PA66) resin, polyphthalamide (PPA) resin, and polyimide (PI) resin.

Further, the present invention also provides a method for separating a silicone coating from a base fabric, including immersing a silicone-coated base fabric in the silicone resin-dissolving agent. Example of the silicone-coated base fabric include a silicone-coated base fabric used for an airbag.

### EXAMPLES

Hereinafter, the present invention will be specifically described with reference to Examples and Comparative Examples. However, the present invention is not limited to the following Examples.

### <Preparation of Silicone-Dissolving Liquid>

The catalyst and octamethylcyclotetrasiloxane (D4) were heat-treated in the proportions and under the reaction conditions, which are shown in Tables 1 to 3, then a component (B) was added at 25°C and stirred for 30 minutes to prepare a silicone-dissolving liquid. It was confirmed by ²⁹Si-NMR according to the method described above that the siliconate compound represented by the above general formula (1) and/or the above general formula (2) was/were contained in the silicone resin-dissolving liquid.

### <Preparation of Integrated Molded Product of Silicone Rubber and Base Material>

KEG-2052T-A/B (manufactured by Shin-Etsu Chemical Co., Ltd.), which is a thermally addition-curable self-adhesive liquid silicone rubber coating material, was applied onto test pieces each of which was made of aluminum, SUS, PPS, PA6, PA66, or PBT so that it had a thickness of 30 to 50 µm. The coating was then heated and cured at 150°C for 5 minutes in a heating furnace to produce an integrated molded product of silicone rubber and base material.

### <Dissolving Test of Integrated Molded Product of Silicone Rubber and Base Material>

The integrated molded product thus produced of the silicone rubber and the base material was cut into pieces with approximately 10 mm square and placed in a 20 mL eggplant flask. Then, 10.0 g of each of the prepared dissolving liquids and a stirrer were placed in an eggplant flask equipped with a cooling tube and heated at 60°C for 30 minutes in an oil bath while performing the stir using a magnetic stirrer. After the heating was completed, the mixture was allowed to cool to 25°C, and the obtained sample was washed with ion-exchanged water and acetone, and then dried at 100°C for 1 hour using a dryer. Then, the IR spectrum was measured under the following conditions to confirm a removing status for the silicone rubber.

### <Confirmation of Removing Status for Silicone>

### [Measuring Conditions of IR spectrum]

IR measurement was performed for a surface where the silicone rubber and the base material had been bonded to each other, using the following equipment under the following conditions.
Equipment: Spectrum 65 FT-IR spectrometer (manufactured by PerkinElmer, Inc.)
Measurement range: 4,000 to 550 cm⁻¹
Number of measurements: 8 times

The case where the Si-CH₃ peak around 2950 cm⁻¹ was detected was evaluated as "Good", and the case where it was not detected was evaluated as "Bad". The results are shown in Tables 1 to 3.

### <Mass Change of Base Material>

Each of various base materials of aluminum, SUS, PPS, PA6, PA66, and PBT was cut into pieces with approximately 10 mm square, and placed in a 20 mL eggplant flask after weighing masses of the pieces. Then, 10.0 g of each of the prepared dissolving liquids and a stirrer were placed in the eggplant flask equipped with a cooling tube and heated at 60°C for 30 minutes in an oil bath while performing the stir using a magnetic stirrer. After completion of heating, the mixture was allowed to cool to 25°C, and the obtained sample was washed with ion-exchanged water and acetone and then dried for 1 hour at 100°C using a dryer. Then, the obtained sample was weighed, and the mass change rate was calculated. The results, rounded off to the first decimal place, are shown in Tables 1 to 3.

### <Preparation of Silicone-Coated Base Fabric>

The PA66 base fabric (210 denier) and a PET base fabric (495 denier) were coated with KEG-2052T-A/B (manufactured by Shin-Etsu Chemical Co., Ltd.), which is a thermally addition-curable self-adhesive liquid silicone rubber coating material, at 25 g/m², and the coating material was heated and cured at 200°C for 1 minute in a drying oven to produce silicone-coated base fabrics.

### <Dissolving Test of Silicone-Coated Base Fabric>

Each of the silicone rubber-coated base fabrics was cut into pieces with 10 mm square, and 1.0 g of the pieces was placed in a 20 mL eggplant flask. Then, 10.0 g of the prepared dissolving liquids and a stirrer were placed in the eggplant flask equipped with a cooling tube and heated at 60°C for 30 minutes in an oil bath while performing the stir using a magnetic stirrer. After completion of heating, the mixture was allowed to cool to 25°C, and the obtained sample was washed with ion-exchanged water and acetone and then dried for 1 hour at 100°C using a dryer. Then, removing status of the silicone rubber was confirmed by the IR measurement in the same manner as the above <Confirmation of Removing Status for Silicone>. The results are shown in Tables 1 to 3. Surface observation using an optical microscope was performed under the following conditions to conform dissolving status of the base fabric.

### <Confirmation of Dissolving Status of Base Fabric>

### [Conditions of Surface Observation Using Optical Microscope]

The surface which had been coated with silicone of the silicone-coated base fabric after completion of the above dissolving test was observed using an optical microscope with the following equipment under the following conditions.
Equipment: LEXT OLS5000 (manufactured by Olympus Corporation)
Magnification: 235 times
Through the observation using an optical microscope, a case where dissolution of the base material was observed was evaluated as "Bad," and a case where no dissolution was observed was evaluated as "Good." The results are shown in Tables 1 to 3.

**[Table 1]**

| | | Example 1 | Example 2 | Example 3 | Example 4 | Example 5 | Example 6 | Example 7 | Comparative Example 1 |
|---|---|---|---|---|---|---|---|---|---|
| Component (A) | Potassium hydroxide | 1 | 5 | 5 | | | | | 0.1 |
| | Tetramethylammonium hydroxide | | | | 1 | 5 | | | |
| | 40% aqueous solution of tetrabutylphosphonium hydroxide | | | | | | 2.5 | 12.5 | |
| | Octamethylcyclotetrasiloxane | 6 | 30 | 60 | 6 | 30 | 6 | 30 | 0.7 |
| <Preparation condition of component (A)> | Reaction temperature / reaction time | 145°C / 2h | 145°C / 2h | 145°C / 2h | 45°C / 12h | 45°C / 12h | 45°C / 6h | 45°C / 6h | 145°C / 2h |
| | Decompression degree in reaction | 760 torr | 760 torr | 760 torr | 30 torr | 30 torr | 30 torr | 30 torr | 760 torr |
| Component (B) | Toluene relative dielectric constant 2.4 / boiling point 111°C | 93 | 65 | 35 | 93 | 65 | 93 | 65 | 99.2 |
| Aluminum | Mass change | +0.0% | -0.1% | +0.1% | -0.1% | +0.0% | -0.2% | +0.2% | +0.0% |
| | Confirmation of silicone removal by IR | Good | Good | Good | Good | Good | Good | Good | Bad |
| SUS | Mass change | +0.0% | +0.1% | +0.0% | -0.1% | +0.0% | -0.1% | +0.0% | +0.0% |
| | Confirmation of silicone removal by IR | Good | Good | Good | Good | Good | Good | Good | Bad |
| PPS | Mass change | +0.2% | +0.2% | +0.0% | -0.2% | -0.1% | +0.2% | -0.1% | -0.1% |
| | Confirmation of silicone removal by IR | Good | Good | Good | Good | Good | Good | Good | Bad |
| PA6 | Mass change | -0.2% | +0.0% | +0.1% | -0.1% | -0.2% | +0.0% | +0.2% | -0.2% |
| | Confirmation of silicone removal by IR | Good | Good | Good | Good | Good | Good | Good | Bad |
| PA66 | Mass change | +0.0% | +0.2% | +0.1% | +0.2% | +0.2 | -0.1% | +0.0% | +0.0% |
| | Confirmation of silicone removal by IR | Good | Good | Good | Good | Good | Good | Good | Bad |
| PBT | Mass change | -0.1% | +0.0% | -0.2% | +0.0% | +0.0 | +0.0% | +0.0% | -0.1% |
| | Confirmation of silicone removal by IR | Good | Good | Good | Good | Good | Good | Good | Bad |
| Silicone-coated PET base fabric | Confirmation of silicone removal by IR | Good | Good | Good | Good | Good | Good | Good | Bad |
| | Surface observation by optical microscope | Good | Good | Good | Good | Good | Good | Good | Good |
| Silicone-coated PA66 base fabric | Confirmation of silicone removal by IR | Good | Good | Good | Good | Good | Good | Good | Bad |
| | Surface observation by optical microscope | Good | Good | Good | Good | Good | Good | Good | Good |

**[Table 2]**

| | | Comparative Example 8 | Comparative Example 9 | Comparative Example 10 | Comparative Example 2 | Comparative Example 3 | Comparative Example 4 |
|---|---|---|---|---|---|---|---|
| Component (A) | Potassium hydroxide | 5 | 5 | 5 | 5 | 5 | 5 |
| | Octamethylcyclotetrasiloxane | 30 | 30 | 30 | 30 | 30 | 30 |
| <Preparation condition of component (A)> | Reaction temperature / reaction time | 145°C / 2h | 145°C / 2h | 145°C / 2h | 145°C / 2h | 145°C / 2h | 145°C / 2h |
| | Decompression degree in reaction | 760 torr | 760 torr | 760 torr | 760 torr | 760 torr | 760 torr |
| Component (B) | Octane relative dielectric constant 1.9 / boiling point 126°C | 65 | | | | | |
| | Xylene relative dielectric constant 2.3 / boiling point 139°C | | 65 | | | | |
| | Tetrahydrofuran relative dielectric constant 7.6 / boiling point 66°C | | | 65 | | | |
| | Isopropyl alcohol relative dielectric constant 18.3 / boiling point 83°C | | | | 65 | | |
| | N,N-Dimethylformamide relative dielectric constant 38.0 / boiling point 153°C | | | | | 65 | |
| | Dimethyl sulfoxide relative dielectric constant 48.9 / boiling point 189°C | | | | | | 65 |
| Aluminum | Mass change | -0.1% | +0.1% | +0.0% | +0.1% | +0.0% | +0.1% |
| | Confirmation of silicone removal by IR | Good | Good | Good | Bad | Bad | Bad |
| SUS | Mass change | +0.1% | +0.0% | +0.1% | +0.1% | +0.2% | +0.0% |
| | Confirmation of silicone removal by IR | Good | Good | Good | Bad | Bad | Bad |
| PPS | Mass change | +0.2% | +0.1% | +0.2% | +0.1% | +0.1% | +0.3% |
| | Confirmation of silicone removal by IR | Good | Good | Good | Bad | Bad | Bad |
| PA6 | Mass change | +0.2% | +0.0% | +0.0% | +0.1% | +0.0% | +0.1% |
| | Confirmation of silicone removal by IR | Good | Good | Good | Bad | Bad | Bad |
| PA66 | Mass change | +0.0% | +0.1% | +0.0% | +0.1% | +0.0% | +0.0% |
| | Confirmation of silicone removal by IR | Good | Good | Good | Bad | Bad | Bad |
| PBT | Mass change | +0.0% | +0.1% | +0.1% | +0.0% | +0.0% | +0.2% |
| | Confirmation of silicone removal by IR | Good | Good | Good | Bad | Bad | Bad |
| Silicone-coated PET base fabric | Confirmation of silicone removal by IR | Good | Good | Good | Bad | Bad | Bad |
| | Surface observation by optical microscope | Good | Good | Good | Good | Good | Good |
| Silicone-coated PA66 base fabric | Confirmation of silicone removal by IR | Good | Good | Good | Bad | Bad | Bad |
| | Surface observation by optical microscope | Good | Good | Good | Good | Good | Good |

**[Table 3]**

| | | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|
| Dissolving liquid | Potassium hydroxide | 5 | 5 | | | | | | |
| | Tetramethylammonium hydroxide | | | 5 | 5 | | | | |
| | 40% aqueous solution of tetrabutylphosphonium hydroxide | | | | | 5 | 5 | | |
| | Dodecylbenzenesulfonic acid | | | | | | | 5 | 5 |
| | Toluene relative dielectric constant 2.4 / boiling point 111°C | 95 | | 95 | | 95 | | 95 | |
| | Isopropyl alcohol relative dielectric constant 18.3 / boiling point 83°C | | 95 | | 95 | | 95 | | 95 |
| <Preparation condition of dissolving liquid> | Reaction temperature / reaction time | 110 °C / 2h | 80°C / 2h | 110 °C / 2h | 80°C / 2h | 110 °C / 2h | 80°C / 2h | Room temperature / 0.5h | Room temperature / 0.5h |
| | Decompression degree in reaction | 760 torr | 760 torr | 760 torr | 760 torr | 760 torr | 760 torr | 760 torr | 760 torr |
| Aluminum | Mass change | | +0.1% | | -0.1 % | | +0.1% | -4.2% | -2.2% |
| | Confirmation of silicone removal by IR | | Bad | | Bad | | Bad | Good | Bad |
| SUS | Mass change | | +0.1% | | -0.1% | | +0.0% | -2.2% | -1.2% |
| | Confirmation of silicone removal by IR | | Bad | | Bad | | Bad | Good | Bad |
| PPS | Mass change | | +0.1% | | +0.1% | | +0.1% | +0.1% | -0.3% |
| | Confirmation of silicone removal by IR | | Bad | | Bad | | Bad | Good | Bad |
| PA6 | Mass change | | +0.0% | | +0.0% | | +0.0% | -6.5% | -2.2% |
| | Confirmation of silicone removal by IR | | Bad | | Bad | | Bad | Good | Bad |
| PA66 | Mass change | No dissolving of catalyst | +0.1% | No dissolving of catalyst | +0.1% | Separation of catalyst | +0.1% | -11.7% | -2.9% |
| | Confirmation of silicone removal by IR | | Bad | | Bad | | Bad% | Good | Bad |
| PBT | Mass change | | -1.5% | | -2.1% | | -0.8% | -0.2% | -0.1% |
| | Confirmation of silicone removal by IR | | Bad | | Bad | | Bad | Good | Bad |
| Silicone-coated PET base fabric | Confirmation of silicone removal by IR | | Bad | | Bad | | Bad | Good | Bad |
| | Surface observation by optical microscope | | Bad | | Bad | | Bad | Good | Good |
| Silicone-coated PA66 base fabric | Confirmation of silicone removal by IR | | Bad | | Bad | | Bad | Good | Bad |
| | Surface observation by optical microscope | | Good | | Good | | Good | Bad | Good |

In Examples 1 to 10, the various base materials each had almost no change in weight and the silicone polymer was efficiently removed. The separated base materials can be recycled into metal plates, resin plates, or various machine parts, etc. by thermal melting. On the other hand, in Comparative Examples 1 to 12, the results in which silicone rubber could not be removed or the base materials was dissolved were obtained. Specifically, silicone was detected from the base materials in each of Comparative Example 1 that is deficient in the component A and Comparative Examples 2 to 4 that did not satisfy the condition of the relative permittivity of the organic solvent. Further, also in Comparative Examples 5 to 12 that did not contain siliconate compound as the component A, the catalyst did not dissolve or separated; silicone was detected from the base materials; or it was observed that the base material dissolved or the mass of the base materials changed.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A silicone resin-dissolving agent comprising:
(A) 1 to 90 mass% of a siliconate compound represented by the following general formula (1) and/or the following general formula (2), 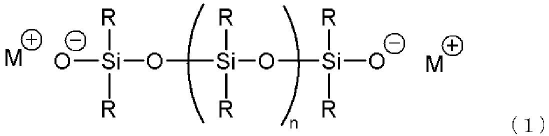 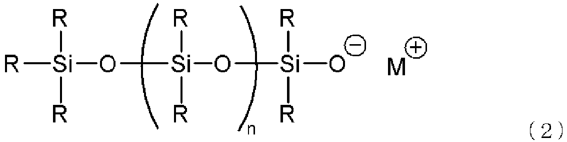 wherein R independently represents a group selected from an alkyl group having 1 to 10 carbon atoms and an aryl group having 6 to 10 carbon atoms, which may be substituted with a halogen atom; M represents a cationic species selected from an alkali metal ion, a tetraalkylammonium ion, a benzyltrialkylammonium ion, and a tetraalkylphosphonium ion; and "n" represents an integer of 0 to 200; and
(B) 99 to 10 mass% of an aprotic organic solvent having a relative permittivity of 10.0 or less.

2. The silicone resin-dissolving agent according to claim 1,
wherein M represents a cationic species selected from a sodium ion, a potassium ion, a tetramethylammonium ion, a tetrabutylammonium ion, or a tetrabutylphosphonium ion.

3. The silicone resin-dissolving agent according to claim 1,
wherein every R represents a methyl group.

4. A method for separating a silicone coating from a base fabric, comprising immersing a silicone-coated base fabric in the silicone resin-dissolving agent according to any one of claims 1 to 3.
